# EUROPEAN PATENT APPLICATION

(11) **EP 1 889 888 A1**
(43) Date of publication of application: **20.02.2008**
(21) Application number: 06756975.6
(22) Date of filing: 05.06.2006
(51) Int. Cl.: C09J 7/02, C09J 153/02

(54) **SURFACE PROTECTION FILM**

(30) Priority: 06.06.2005 JP 2005165798; 01.11.2005 JP 2005318547
(71) Applicant: Sekisui Chemical Co., Ltd., Osaka 530-8565 (JP)
(72) Inventor: TOYOSHIMA, Katsunori, SEKISUI CHEMICAL CO., LTD., Mishima-gun, Osaka 618-8589 (JP); NOSETANI, Hajime, c/o SEKISUI CHEMICAL CO., LTD., Hasuda-city, Saitama 349-0198 (JP); SHIMOURA, Yoshio, c/o SEKISUI CHEMICAL CO., LTD., Mishima-gun, Osaka 618-8589 (JP)
(74) Representative: Hollatz, Christian
(86) International application number: PCT/JP2006/311229
(87) International publication number: WO 2006/132183

(57) **Abstract**

Disclosed is a surface protection film which has excellent initial adhesive force and can be easily removed from an object to which it is adhered. The adhesive force of this surface protection film does not undesirably increase as time passes. Specifically disclosed is a surface protection film wherein a rubber adhesive layer containing a rubber resin is arranged on a polyolefin substrate. The rubber resin is composed of a styrene elastomer which has a block copolymer of a styrene polymer block (A) and an olefin elastomer component (B), a block copolymer of a styrene polymer block (A) and a random copolymer block (B') of styrene and an olefin, or a hydrogenated product of either of the block copolymers as a main component. The rubber adhesive layer has a tensile storage modulus at a frequency of 10 Hz of not less than 2.5 × 10⁹ Pa at -100 °C, and a shear storage modulus at a frequency of 10 Hz of from 5 × 10⁴ to 5 × 10⁶ Pa at 23 °C.

## Description

### TECHNICAL FIELD

The present invention relates to a surface protection film which prevents dust from adhering on the surface of an adherend and prevents the surface of an adherend from scratching. More particularly, it relates to a surface protection film comprising a polyolefin substrate and a rubber pressure-sensitive adhesive layer laminated on one side thereof.

### BACKGROUND ART

In many cases, a surface protection film is temporally adhered on the surface of various articles or members in order to protect them. For example, a surface protection film is widely used on the surface of various adherends such as synthetic resin plates, metal plates, decorated plywoods, coated steel plates, coated resin plates or various nameplates, particularly coated steel plates and coated resin plates, in order to prevent contamination from adhering on the surface of them and prevent the surface thereof from scratching at the time of processing and transportation.

The surface protection film of this kind has a structure comprising a film substrate and a pressure-sensitive adhesive layer laminated on one side thereof. In general, as the film substrate, a thermoplastic resin film is used. The surface protection film is adhered on the surface of an adherend utilizing adhesive force of the pressure-sensitive adhesive layer, thereby attempting protection of the surface of an adherend. When the adherend is used, the surface protection film is removed from the surface of the adherend. Therefore, the surface protection film is required to have adhesive force suitable to temporally adhere the same on the surface of an adherend, and after used, is required to have good peelability to an extent such that the film can easily be removed from the surface of an adherend. Additionally, the film is strongly required that the surface of an adherend after removing is not contaminated with adhesive remain and the like.

For example, in some cases, bodies and parts of automobiles after coated are loaded on trucks or ships, and are transported to remote places such as foreign countries. During the transportation, various suspended substances such as dust, dirt, raindrops and the like may be adhered to a coating film, and the coating film is liable to be stained or discolored. Furthermore, the coating film may be damaged by collision substances.

Therefore, to prevent contamination, discoloration, damage and the like of the coating film, a surface protection film is temporally adhered to the surface of the coating film, and transportation to remote places such as foreign countries is carried out.
The surface protection film for protecting coating film of this kind also comprises a film substrate and a pressure-sensitive adhesive layer laminated on one side thereof. In general, as the film substrate, a thermoplastic resin film is used.

A surface protection film used for protecting coating film of the coated steel plates and the like or a surface protection film for protecting various articles is in general temporally adhered manually to the surface to be protected, and is removed before use.

Therefore, the surface protection film is required that 1) an initial adhesive force is sufficient, 2) stability in adhesive force with time is good and adhesive force is not liable to fluctuate with time, and 3) in peeling, the film can easily be peeled and adhesive remain is difficult to occur.

Patent Document 1 shown below discloses a surface protection film for automobile coating film protection, comprising a substrate and a pressure-sensitive adhesive layer laminated on the surface thereof, wherein the pressure-sensitive adhesive layer contains a polyisobutylene. Patent Document 1 shows that performance of the surface protection film can be enhanced by using a polyisobutylene in a pressure-sensitive adhesive layer. However, the polyisobutylene-base pressure-sensitive adhesive has excellent stability in adhesive force with time and peel workability, but has considerably low SP value. Therefore, an initial adhesive force to a coated steel plate was not sufficient. In other words, there was still room for improvement in the initial adhesive force of the above 1).

On the other hand, Patent Document 2 shown below discloses a surface protection film using a pressure-sensitive adhesive layer comprising a styrene-base elastomer. Patent Document 2 describes that 1) a sufficient initial adhesive force is given, and 2) stability in adhesive force with time is enhanced by controlling elastic modulus of the pressure-sensitive adhesive layer.

However, regarding 3) peel workability, the surface protection film shown by the Patent Document 2 was inferior to a surface protection film having the pressure-sensitive adhesive layer containing a polyisobutylene.

Furthermore, a conjugated diene is used in an elastomer moiety of a soft segment, and hydrogenation is conducted finally. However, it is industrially difficult to perform hydrogenation completely 100%, and as a result, heat resistance was not sufficient.

On the other hand, Patent Document 3 shown below discloses a pressure-sensitive adhesive composition containing a block copolymer having at least two terminal polymer block A and at least one intermediate polymer block B, a tackifier and a softener in specific proportions. The block A is a polymer block substantially derived from an aromatic vinyl compound, and the block B is a polymer block substantially derived from isobutylene. Patent Document 3 describes that the pressure-sensitive adhesive composition shown in Patent Document 3 is difficult to deteriorate even though exposed to high temperature of 70°C, thus being stable to heat, as compared with a natural rubber-based pressure-sensitive adhesive, and additionally, the pressure-sensitive adhesive composition is excellent in stability to ultraviolet rays.

However, the pressure-sensitive adhesive composition of Patent Document 3 is not developed as a surface protection film which is required to have repeelability for protecting the articles or the members as described above, but developed to use in various pressure-sensitive tapes and pressure-sensitive sheets mainly for the purpose of permanent adhesive force and fixation. For this reason, even though this pressure-sensitive adhesive composition is used for protecting a coating film, the composition could not sufficiently satisfy performances required in a surface protection film. For example, where a pressure-sensitive adhesive sheet is prepared using the pressure-sensitive adhesive composition of Patent Document 3, there was the case that stability in adhesive force with time is poor, and adhesive force fluctuates with the passage of time. Furthermore, it was extremely difficult to peel a pressure-sensitive adhesive sheet from an adherend after adhering the same to the adherend such as a coating film, and even if the sheet could be peeled, adhesive remain was liable to occur on the adherend after peeled.
Patent Document 1: JP-A-6-73352
Patent Document 2: JP-A-2001-234149
Patent Document 3: JP-B-7-57865

### DISCLOSURE OF THE INVENTION

An object of the present invention is to provide a surface protection film which overcomes the above-described disadvantages of the prior art and has excellent initial adhesive force, excellent stability in adhesive force with time, and in particular excellent peel workability.

According to the present invention, there is provided a surface protection film comprising a polyolefin substrate and a pressure-sensitive adhesive layer laminated thereon, containing a rubber resin and a tackifier, wherein the rubber resin is a styrene elastomer comprising as a main component, a block copolymer of a styrene polymer block (A) and an olefin polymer block (B), a block copolymer of a styrene polymer block (A) and a random copolymer block (B') of styrene and an olefin, and/or hydrogenated products of these copolymers, and the rubber pressure-sensitive adhesive layer has a tensile storage modulus at a frequency of 10 Hz of 2.5×10⁹ Pa or more at -100°C and a shear storage modulus at 10 Hz of from 5×10⁴ to 5×10⁶ Pa at 23°C.

In the present invention, the rubber resin is preferably a styrene elastomer comprising a block copolymer of a styrene polymer block (A) and an olefin polymer block (B), wherein the block (B) is a polyisobutylene. In this case, an initial adhesive force to an adherend is excellent, stability in adhesive force with time is enhanced, and peel workability of the pressure-sensitive adhesive layer is excellent. Furthermore, for example, when adhered to a steel plate, peeling due to impact at the time of machining a steel plate and spontaneous peeling from the steel plate during storage are not liable to occur.

Furthermore, in a specific aspect of the surface protection film according to the present invention, the rubber resin is a mixture of a block copolymer (D) comprising the styrene polymer block (A) and an isobutylene polymer block (C), and a block copolymer (F) comprising the styrene polymer block (A) and a conjugated diene polymer block or a hydrogenated product (E) thereof. In this case, more preferably the rubber resin contains the block copolymers (D) and (F) in the proportions that the block copolymer (D) is from 60 to 97% by weight and the block copolymer (F) is from 40 to 3% by weight. In this case, an initial adhesive force to an adherend and stability in adhesive force with time are further improved. Furthermore, for example when adhered to a steel sheet, spontaneous peeling from a steel sheet can further effectively be prevented.

In another specific aspect of the surface protection film according to the present invention, the pressure-sensitive adhesive layer has a shear storage modulus at a frequency of 10 Hz of 3×10⁷ Pa or less at -30°C.

In this case, more preferably the pressure-sensitive adhesive layer has a shear storage modulus at a frequency of 10 Hz of 2×10⁵ Pa or more at 70°C.

In still another specific aspect of the surface protection film according to the present invention, the pressure-sensitive adhesive layer further contains an olefin oligomer. More preferably the olefin oligomer is contained in an amount of 10 parts by weight or less per 100 parts by weight of the rubber resin.

In other specific aspect of the surface protection film according to the present invention, a surface protection film suitably used for protecting a coating film, wherein the polyolefin substrate contains an anti-weathering agent, and the polyolefin substrate has ultraviolet transmission of 10% or less in a wavelength range of from 190 to 370 nm. In this case, when a surface protection film for protecting the coating film is temporally adhered to the coating film of automobiles and the like and such products are transported, even when the surface protection film is exposed to sunlight and the like, temperature rise of the surface protection film can be suppressed, and additionally, the amount of ultraviolet ray that passes through the polyolefin substrate and reaches the pressure-sensitive adhesive layer is reduced.
As a result, the polyolefin substrate and the pressure-sensitive adhesive layer are difficult to deteriorate. Consequently, when the surface protection film is peeled from the coating film, adhesive remain can effectively be suppressed on the coating film surface.
Furthermore, the amount of ultraviolet ray that passes through the surface protection film and reaches the coating film is reduced, and as a result, deterioration of the coating film due to ultraviolet ray can be suppressed.

According to other wide aspect of the present invention, a surface protection film comprising a polyolefin substrate, a pressure-sensitive adhesive layer laminated thereon and comprising a pressure-sensitive adhesive composition containing a rubber resin, a tackifier and an olefin oligomer is provided. Due to that the olefin oligomer is contained, cohesive force of the pressure-sensitive adhesive is increased. For example, even when the film is adhered to an adherend such as a coated steel plate having rough surface and then exposed to high temperature, adhesive remain is difficult to occur after peeling at high temperature.
Preferably the olefin oligomer is added in an amount of 10 parts by weight or less per 100 parts by weight of the rubber resin.
The present invention is described in detail below.

As a result of extensive and intensive investigations on a surface protection film comprising a polyolefin substrate and a rubber pressure-sensitive adhesive layer laminated on the surface thereof, the present inventors have found that the above object can be achieved by that the rubber pressure-sensitive adhesive layer is a styrene elastomer containing the olefin polymer block (B) or the random copolymer block (B') of styrene and an olefin, and has a tensile storage modulus at 10 Hz of 2.5×10⁹ Pa or more at -100°C and a shear storage modulus at 10 Hz of from 5×10⁴ to 5×10⁶ Pa at 23°C.

The rubber pressure-sensitive adhesive layer of the surface protection film according to the present invention contains a rubber resin. The rubber resin is a styrene elastomer comprising as a main component, a block copolymer of a styrene polymer block (A) and an olefin polymer block (B), a block copolymer of a styrene polymer block (A) and a random copolymer block (B') of styrene and an olefin, and/or hydrogenated products of these copolymers. In other words, the styrene elastomer is a styrene elastomer of the following (1), (2) or (3).

(1) Styrene elastomer comprising as a main component, a block copolymer of a styrene polymer block (A) and an olefin polymer block (B) . More specifically, the olefin polymer block (B) includes a conjugated diene polymer block and an isobutylene polymer block. The styrene elastomer is not particularly limited so long as (A)-(B) block copolymer is a main component, and may include copolymers represented by A-B, A-B-A, (A-B)ₙ, (A-B)ₙX and the like, wherein n is an integer of 1 or more, and X is a residue due to a coupling agent.

(2) Styrene elastomer comprising as a main component, a block copolymer of a styrene polymer block (A) and a random copolymer block (B') of styrene and an olefin such as a conjugated diene or isobutylene. Such a styrene elastomer includes the following (2-1) to (2-4).

(2-1) Styrene elastomer in which the block (A) and the block (B') are bonded: A-B' block copolymer
(2-2) Styrene elastomer containing a taper block (G) wherein styrene among styrene and one of a conjugated diene and an isobutylene increases gradually: A-B' -G block copolymer
(2-3) Styrene elastomer containing a styrene polymer block (A) in place of the taper block (G): A-B'-A block copolymer
(2-4) Styrene elastomer in which (2-1) to (2-3) are repeated or are bonded in optional proportions: (A-B')ₙ, (A-B')ₙX, (A-B'-G)ₙX, (A-B'-A)ₙX and the like

n is an integer of 1 or more, and X is a residue due to a coupling agent.
(3) Styrene elastomer comprising a hydrogenated product of (1) or (2) above as a main component.

Examples of the olefin used in the olefin polymer block (B) and the random copolymer block (B') of the styrene elastomer include a conjugated diene such as butadiene or isoprene, and isobutylene. Isobutylene is preferably used. Polyisobutylene does not originally have an aliphatic unsaturated bond. Therefore, hydrogenation is not necessary, and heat stability and weathering resistance can be improved, when an isobutylene is used as the olefin in the olefin polymer block.

In the styrene elastomer (2) or the styrene elastomer (3) comprising a hydrogenated product of (2) as a main component, the proportion of constituents of styrene to a conjugated diene or isobutylene as an olefin is in a range of preferably from 5: 95 to 60:40, and more preferably from 7: 93 to 40: 60, in weight ratio. In case of the styrene content being less than 5% by weight, cohesive force of the pressure-sensitive adhesive layer deteriorates, and it is likely that adhesive remain occurs when peeling the surface protection film. Where the styrene content exceeds 60% by weight, adhesive force is deficient, and it may be difficult to adhere the film to an adherend.

In the styrene elastomer (2) and the styrene elastomer (3) comprising a hydrogenated product of (2) as a main component, the sum of the styrene content which is the sum of the styrene content in the block (A) in the whole monomer constitution constituting the styrene elastomer and the styrene content in the taper block (G) is preferably in a range of from 5 to 50% by weight, more preferably in a range of from 5 to 40% by weight, and further preferably in a range of from 5 to 25% by weight, in the constitution containing the taper block (G). In case of the total content of styrenes in the block (A) and the taper block (G) being less than 5% by weight in the whole monomers, cohesive force of the pressure-sensitive adhesive layer deteriorates, and it is likely that adhesive remain occurs on an adherend when peeling the surface protection film. In case of the total content exceeding 50% by weight, adhesive force of the pressure-sensitive adhesive layer is deficient, and it may be difficult to adhere the film to an adherend. The styrene content in the block (A) in the whole monomer constitution constituting the styrene elastomer is preferably 3% by weight or more, and more preferably from 3 to 20% by weight.

When the rubber resin has an unsaturated double bond originated from an olefin, the unsaturated double bond is desirable as being small from the standpoint of enhancing heat resistance and weathering resistance, and it is preferred that the rubber resin is hydrogenated according to need. In this meaning, a rubber resin using isobutylene as an olefin is preferable, since an unsaturated bond does not remain after completion of addition polymerization.

In the styrene elastomer (3) comprising a hydrogenated product of the styrene elastomers (1) and (2) as a main component, it is preferred that at least 80% of double bonds in a conjugated diene moiety in the conjugated diene polymer block as the olefin polymer block (B) or in the random copolymer block (B') of styrene and a conjugated diene as an olefin is saturated by hydrogenation. The proportion of hydrogenation is more preferably 90% or more, and further preferably from 95 to 100%. In case that the proportion of hydrogenation is less than 80%, heat resistance and weathering resistance may deteriorate.

The styrene elastomer has a weight average molecular weight preferably in a range of from 30,000 to 400,000, and more preferably in a range of from 50,000 to 200,000, in terms of polystyrene conversion measured with GPC (gel permeation chromatography). In case of the weight average molecular weight being less than 30, 000, cohesive force of the pressure-sensitive adhesive layer deteriorates, and adhesive remain may occur on an adherend when peeling the surface protection film. In case of the weight average molecular weight exceeding 400,000, adhesive force is deficient, and additionally, problems such as increase in solution viscosity and melt viscosity may be caused at the time of preparation of the pressure-sensitive adhesive composition and production of the surface protection film.

The rubber pressure-sensitive adhesive according to the present invention further contains a tackifier in addition to the rubber resin. The tackifier is not particularly limited so long as it satisfies the above-described tensile storage modulus and shear storage modulus ranges when added to the rubber resin. Examples of the tackifier include aliphatic petroleum resins, alicyclic petroleum resins, aromatic petroleum resins, terpene resins, terpene-phenol resins, alkyl-phenol resins, coumarone-indene resins, rosin resins, paraffin oils, naphthene oils, aromatic oils, castor oils, tall oils, natural oils and liquid polyisobutylene resins. Specifically, the alicyclic petroleum resin includes ARKON, trade name, a product of Arakawa Chemical Industries, Ltd.; the terpene resin includes CLEARON, trade name, a product of Yasuhara Chemical Co., Ltd.; the paraffin oil includes Diana Process Oil: DIANA FRECIA, trade name, a product of Idemitsu Kosan Co., Ltd.; and the liquid polyisobutylene resin includes GLYSOPEARL, trade name, a product of BASF. Those may be used alone or as mixtures of two or more thereof.

The tackifier is added in a range of preferably from 5 to 70 parts by weight, and more preferably from 10 to 50 parts by weight, per 100 parts by weight of the rubber resin. Where the amount of the tackifier added is less than 5 parts by weight, the shear storage modulus may become too high, and additionally, adhesive force to an adherend may be deficient. Where the amount exceeds 70 parts by weight, cohesive force of the pressure-sensitive adhesive is deficient, and it may be difficult to peel from an adherend when used as a surface protection film. Furthermore, adhesive remain may occur when peeling.

The rubber pressure-sensitive adhesive layer of the surface protection film according to the present invention has a tensile storage modulus at a frequency of 10 Hz of 2.5×10⁹ Pa or more at -100°C. In peeling the surface protection film from an adherend, the film is manually peeled. Average peeling rate in this case is 20 m/min or more. As a result of extensive and intensive investigations on manual peeling step, the present inventors have found that adhesive force of a pressure-sensitive adhesive layer to an adherend when peeling is closely correlated with a tensile storage modulus at a frequency of 10 Hz at -100°C, and become to make the present invention. In other words, the fact that the tensile storage modulus at -100°C is closely correlated with peel workability when manually peeling has first been found by the present inventors. The present invention provides a surface protection film that can be smoothly removed from an adherend without occurrence of adhesive remain when manually peeling, by setting the tensile storage modulus at -100°C to a specific value, i.e., 2.5×10⁹ Pa or more.

At the time of filing the present application, it was impossible for one skilled in the art to predict that specific effect of giving excellent workability in manually peeling is obtained by setting the tensile storage modulus at -100°C of a pressure-sensitive adhesive layer to 2.5x10⁹ Pa or more. Therefore, since the tensile storage modulus is 2.5x10⁹ Pa or more at -100°C, an effect which is not predicted by one skilled in the art can be obtained. The upper limit of the tensile storage modulus at a frequency of 10 Hz at -100°C is not particularly limited. The upper limit that can be confirmed at the present time is 5×10⁹ Pa at the maximum.
As the conventional surface protection film, a film comprising a polyolefin substrate and a rubber pressure-sensitive adhesive layer formed on one side thereof, and the adhesive layer comprising SEBS (styrene-ethylene-butylene-styrene polymer) as a main component has been used. In the rubber pressure-sensitive adhesive layer using SEBS, the tensile storage modulus at -100°C is less than 2.5×10⁹ Pa, and does not satisfy the requirement of 2.5×10⁹ Pa or more.

In the present invention, it is required that the rubber pressure-sensitive adhesive layer has the shear storage modulus at a frequency of 10 Hz in a range of from 5×10⁴ to 5×10⁶ Pa at 23°C. Where the shear storage modulus exceeds this range, the surface protection film may peel from an adherend during transportation due to deficient adhesive force, and where it is lower than the range, the tensile storage modulus at -100°C is decreased, and as a result, workability in peeling step may deteriorate or adhesive remain is liable to occur when peeling.

That is, in the present invention, by setting the tensile storage modulus at a frequency of 10 Hz at -100°C and the shear storage modulus at 23°C to the above-described specific ranges, it is achieved that all of (1) initial adhesive force, (2) stability in adhesive force with time and (3) peel workability of the surface protection film are good.
In the present invention, the rubber resin in the pressure-sensitive adhesive layer of the surface protection film may contain at least two kinds of rubber resins. The rubber resins may be a styrene elastomer comprising a mixture of a block copolymer (D) comprising the styrene polymer block (A) and the isobutylene polymer block (C), and a block copolymer (F) comprising the styrene polymer block (A) and the conjugated diene polymer block or its hydrogenated product (E).

More specifically, the block copolymer (D) comprises a block copolymer of the styrene polymer block (A) and the olefin polymer block (B), a block copolymer of the styrene polymer block (A) and the random copolymer block of styrene and an olefin, and/or a styrene elastomer comprising a hydrogenated product thereof as a main component wherein the olefin is isobutylene. The block copolymer (F) is that the olefin comprises the conjugated diene.

(Preferable shear storage modulus range of pressure-sensitive adhesive layer at a frequency of 10 Hz at -30°C)
In the surface protection film according to the present invention, the pressure-sensitive adhesive layer preferably has the shear storage modulus at a frequency of 10 Hz of 3×10⁷ Pa or less at -30°C.

When the surface protection film is stored outdoors in winter in a state that it is temporally adhered to an adherend, the temperature of the surface protection film may be lower than 0°C. In this case, in the conventional surface protection film, adhesive force of the surface protection film deteriorates, and there was the case that the surface protection film spontaneously peels from an adherend.

As a result of extensive and intensive investigations, the present inventors have found that spontaneous peeling phenomenon of the surface protection film when stored outdoors in winter is correlated with adhesive force between the pressure-sensitive adhesive layer and the adherend at -5°C. Specifically, peeling rate dependency of adhesive force between the pressure-sensitive adhesive layer and the adherend at -5°C is evaluated, and if rubber peeling occurs in a region that the peeling rate is 30 mm/min or less, it was clarified that the surface protection film does not peel from the adherend when stored outdoors in winter, and temporally adhered state can sufficiently be maintained.

Furthermore, the present inventors have found that adhesive force between the pressure-sensitive adhesive layer and the adherend at -5°C is closely correlated with the shear storage modulus at -30°C, and have reached the present invention. That is, the fact that the shear storage modulus at -30°C is closely correlated with spontaneous peeling phenomenon of the surface protection film when stored outdoors in winter has been first found by the present inventors. The present invention is characterized in that the shear storage modulus at -30°C is set to a specific value, i.e., 3x10⁷ Pa or less.

At the time of filing the present application, it could not be predicted by one skilled in the art that by the constitution that the shear storage modulus at -30°C is 3x10⁷ Pa or less, rubber peeling occurs in a region that peeling rate at -5°C is 30 mm/min or less, and temporally adhered state between the surface protection film and the adherend can sufficiently be maintained, in other words, the effect for suppressing spontaneous peeling phenomenon of a coating film protection film when stored outdoors in winter is obtained. That is, the constitution that the shear storage modulus at -30°C is 3×10⁷ Pa or less develops the effect that could not be predicted by one skilled in the art.

More specifically, by setting the shear storage modulus at a frequency of 10 Hz at -30°C and the shear storage modulus at 23°C to the above-described specific ranges, the surface protection film particularly has good initial adhesive force, and does not peel from the adherend when stored outdoors in winter, thereby sufficiently maintaining temporally adhered state.

It is preferred in the surface protection film according to the present invention that the pressure-sensitive adhesive layer has a shear storage modulus at a frequency of 10 Hz of 2×10⁵ Pa or more at 70°C. When the pressure-sensitive adhesive layer has a shear storage modulus at a frequency of 10 Hz of 2×10⁵ Pa or more at 70°C, stability in adhesive force with time is further excellent, and fluctuation of adhesive force with the passage of time can be suppressed. Where the shear storage modulus is less than 2×10⁵ Pa at 70°C, adhesive force may fluctuate with time.

### (Polyolefin substrate)

The polyolefin constituting the polyolefin substrate is not particularly limited, and a polyolefin such as polypropylene or polyethylene, and a polyolefin having an olefin elastomer mixed therewith can be used.

The thickness of the polyolefin substrate varies depending on the purpose of use, but is preferably from 20 to 100 µm. Where the thickness is less than 20 µm, protection performance of an adherend such as a coating film may not sufficiently be exhibited, and where the thickness is more than 100 µm, cost increases, and production may be difficult.

### (Preferable polyolefin substrate)

In the present invention, conventional additives generally added in this field may be added to the polyolefin substrate. Examples of the additives include stabilizers such as light resisting agent or antioxidant that can be added to the pressure-sensitive adhesive layer, and further include lubricants, antistatic agents, antirusts and pigments. For example, in the case of a surface protection film which is exposed to ultraviolet ray, such as a surface protection film which protects a coating film for automobiles, anti-weathering agent is preferably added to the polyolefin substrate.

Ultraviolet shielding materials and/or ultraviolet stabilizers are preferably used as the anti-weathering agent added to the polyolefin substrate.
Examples of the ultraviolet shielding material include inorganic pigments such as titanium oxide, zinc oxide, calcium carbonate and carbon black. Those may be used alone or may be used as a blend of two or more thereof. Of those, titanium oxide is particularly preferably used for the reason that it has excellent ultraviolet shielding properties.

Examples of the ultraviolet stabilizer include salicylic acid type, benzophenone type, benzotriazole type and cyanoacrylate type ultraviolet absorbers, and light stabilizers such as hindered amine type compounds. Those may be used alone or as mixtures of two or more thereof.

### (Olefin oligomer)

In the present invention, in addition to the rubber resin and the tackifier, an olefin oligomer is preferably further added to the pressure-sensitive adhesive composition constituting the pressure-sensitive adhesive layer.

Examples of the olefin oligomer include ethylene oligomer and propylene oligomer. The term "oligomer" used herein means an oligomer having a number average molecular weight of about 10,000 or less in terms of polystyrene conversion measured with GPC.

Examples of the ethylene oligomer include ethylene homooligomer, ethylene-acrylic acid oligomer, ethylene-vinyl acetate oligomer, and ethylene-maleic anhydride oligomer. Specifically, examples of the ethylene homooligomer include A-C6, 6A, product number, a product of Honeywell; EXCEREX, product name, a product of Mitsui Chemicals, Inc.; SUNWAX, product name, a product of Sanyo Chemical Industries, Ltd.; and LICOCENE PE, trade name, a product of Clariant. Example of the ethylene-acrylic acid oligomer includes A-C540, product number, a product of Honeywell. Example of the ethylene-vinyl acetate oligomer includes A-C400, product number, a product of Honeywell. Example of the ethylene-maleic anhydride oligomer includes A-C573A, product number, a product of Honeywell.

Examples of the propylene oligomer include propylene homooligomer, propylene-ethylene oligomer and propylene-maleic anhydride oligomer. Examples of the propylene homooligomer include VISCOL, trade name, a product of Sanyo Chemical Industries, Ltd.; and LICOCENE PP6102 and 6050M, product number, products of Clariant. Examples of the propylene-ethylene oligomer include LICOCENE PP4202, 1302, 1502 and 1602, product number, products of Clariant. Example of the propylene-maleic anhydride includes LICOMONT, trade name, a product of Clariant.

The olefin oligomer is added in an amount of preferably from 0.1 to 10 parts by weight, and more preferably from 1 to 6 parts by weight, per 100 parts by weight of the rubber resin. Where the addition amount of the olefin oligomer is less than 0.1 part by weight, addition effect of the olefin oligomer is small, and reliability of adhesive remain to an adherend may not sufficiently be obtained. Where the addition amount of the olefin oligomer exceeds 10 parts by weight, compatibility with the rubber resin deteriorates, and stability in adhesive force with time to an adherend may deteriorate.

The olefin oligomer used in the present invention is preferably compatible with the rubber resin. Stability in adhesive force with time and excellent adhesive remain stability even with the passage of time can be developed by controlling compatibility between the olefin oligomer and the rubber resin.

Compatibility between the rubber resin and the olefin oligomer is evaluated by the following method.
5 parts by weight of an olefin oligomer were melt blended with 100 parts by weight of a rubber resin to prepare a press sheet having a thickness of 1 mm. Using this press sheet, haze is measured in a liquid paraffin using a cell having a light path length of 10 mm according to JIS K7105. When the haze is 20% or less, it is considered to have compatibility, and when the haze exceeds 20%, it is considered not to have compatibility.

As the olefin resin as the polyolefin substrate, it is preferable to select an olefin resin which is well compatible with the olefin oligomer. In this case, interfacial adhesive force between the substrate and the pressure-sensitive adhesive layer, that is, anchor properties of the pressure-sensitive adhesive to the substrate, can be enhanced by adding an olefin oligomer compatible with the rubber resin.

Examples of the combination of the olefin resin and the olefin oligomer, the compatibility of which are excellent with each other, include propylene polymer (homopolymer, block copolymer or random copolymer) and propylene oligomer; propylene polymer (block copolymer or random copolymer) and ethylene oligomer; and ethylene polymer and ethylene oligomer and the like.

When the olefin oligomer is blended with the rubber resin and the tackifier, elastic modulus of the pressure-sensitive adhesive at high temperature (70°C) is improved and cohesive force of the pressure-sensitive adhesive is improved, as compared with those before the addition. Furthermore, interfacial adhesive force between the substrate and the pressure-sensitive adhesive layer can be enhanced by selecting an olefin oligomer having excellent compatibility with the substrate and excellent compatibility with the pressure-sensitive adhesive layer. In particular, when the pressure-sensitive adhesive layer obtained by adding a propylene oligomer is applied to a polypropylene substrate which is commonly used for the purpose of protecting a coating film of automobiles, the effect is further remarkable even in a small amount.

Addition of the olefin oligomer results in a) improvement in cohesive force of the pressure-sensitive adhesive layer at high temperature and b) improvement in interfacial adhesive force between the substrate and the pressure-sensitive adhesive layer, making it difficult to generate adhesive remain when peeling at high temperature.
In the present invention, a surface protection film comprising a polyolefin substrate and a pressure-sensitive adhesive layer laminated thereon consisting of a pressure-sensitive adhesive composition containing the rubber resin other than the above-described specific styrene elastomer, the tackifier, and the olefin oligomer is provided, and in this case, the styrene elastomer is preferably used as the rubber resin. The other rubber resin such as a polyisobutylene or a butyl rubber may be used. Most preferably, the styrene elastomer is used.

In the surface protection film according to the present invention, according to need, stabilizers such as light resisting agent or antioxidant, adhesive-force-promoting-inhibitor, or the like may be added to the pressure-sensitive adhesive layer in a range of not impairing adhesive force performance.

The light resisting agent is not particularly limited, and examples thereof include salicylic acid type, benzophenone type, benzotriazole type and cyanoacrylate type ultraviolet absorbers and light stabilizers such as hindered amine type compounds. Examples of the antioxidant include phenol type (monophenol type, bisphenol type or polymeric phenol type), sulfur type and phosphorus type antioxidants.

Examples of the adhesive-force-promoting-inhibitor include fatty acid amide, a long chain alkyl grafted product of polyethyleneimine, a soybean oil-modified alkyd resin (such as ARAKYD 251, product number, a product of Arakawa Chemical Industries, Ltd.) and a tall oil-modified alkyd resin (such as ARAKYD 6300, product number, a product of Arakawa Chemical Industries, Ltd.).

### (Preferable surface protection film for coating film)

In the present invention, a surface protection film suitable to protect, for example, a coating film of automobiles comprises a polyolefin substrate containing the above-described anti-weathering agent and having ultraviolet transmission of 10% or less at a wavelength in a range of from 190 to 370 nm, and having the pressure-sensitive adhesive layer comprising the pressure-sensitive adhesive composition containing the rubber resin containing the above-described styrene elastomer, and the tackifier.

When the ultraviolet transmission at a wavelength in a range of from 190 to 370 nm is set to 10% or less, a film for coating film protection, particularly a film for protection of a coating film for automobiles, has sufficient weatherability. The ultraviolet transmission is preferably 1% or less. To achieve this range, it is designed while considering the addition amount of the ultraviolet shielding material and the ultraviolet absorber and the thickness of the substrate. From the advantage that temperature rise of the surface of a coating film can be suppressed, it is effective to add ultraviolet shielding materials further having heat ray reflection performance, such as titanium oxide.

The surface protection film for coating film protection according to the present invention is temporally adhered to a coating film through a pressure-sensitive adhesive layer. For example, where the temporally adhered surface protection film is irradiated with ultraviolet ray, the ultraviolet ray reaches the pressure-sensitive adhesive layer adhered to the coating film through a polyolefin substrate. In the present invention, the ultraviolet transmission of the polyolefin substrate is set to the above-described specific range, and as a result, deterioration of not only the polyolefin substrate but the pressure-sensitive adhesive layer adhered to the coating film can effectively be suppressed. Consequently, deterioration of the pressure-sensitive adhesive layer adhered to the coating film is difficult to occur, and as a result, occurrence of adhesive remain on a coating film surface when peeling the surface protection film from the coating film can effectively be suppressed. Furthermore, the amount of ultraviolet ray reaching the coating film through the surface protection film is reduced, and as a result, deterioration of the coating film due to ultraviolet ray can be suppressed.

The effect due to that the pressure-sensitive adhesive layer has a shear storage modulus at a frequency of 10 Hz of 3×10⁷ Pa or less at -30°C is as described above. On the other hand, it is required for the pressure-sensitive adhesive layer to have a shear storage modulus at a frequency of 10 Hz in a range of from 5×10⁴ to 5×10⁶ Pa at 23°C. Where the shear storage modulus is fallen outside this range, it is likely that the surface protection film peels from the coating film during transportation due to deficient adhesive force, and workability when peeling is poor.

That is, by setting the shear storage modulus at a frequency of 10 Hz at -30°C and the shear storage modulus at 23°C to the above-described specific ranges, such a surface protection film particularly has good initial adhesive force, and in addition to this, does not peel from the coating film when stored outdoors in winter, thus sufficiently maintaining a temporally adhered state. Furthermore, even in the surface protection film used for protecting coating film, the shear storage modulus at a frequency of 10 Hz at 70°C is preferably 2×10⁵ Pa or more. The reason for this is described above.

### (Other adherend)

The surface protection film of the present invention is suitably used for protecting coating film. However, the surface protection film is not limited to the use for protecting the coating film, but can be applied to various adherends. That is, the surface protection film can suitably be used for the protection of the surface of an adherend comprising a synthetic resin such as an acrylic resin or a material having a polarity such as a metal. Even in this case, adhesive remain is difficult to occur, and good peeling performance can be obtained. That is, the surface of an adherend to which the surface protection film of the present invention is applied is not particularly limited.

Production method of the surface protection film is not particularly limited. Examples of the production method include a method of lamination integration by co-extruding the pressure-sensitive adhesive composition constituting the pressure-sensitive adhesive layer and the composition constituting the polyolefin substrate, and a method of lamination integration by laminating the pressure-sensitive adhesive composition on a film-formed polyolefin substrate.

The method of lamination integration method by co-extruding the polyolefin substrate and the pressure-sensitive adhesive composition can use the conventional methods such as an inflation method or a T die method. The method of laminating the pressure-sensitive adhesive composition on the polyolefin substrate can use a solution coating method which applies a pressure-sensitive adhesive solution, a dry lamination method and an extrusion coating method using T die. Of those, the co-extrusion method using T die is preferred in order to improve quality and to produce economically. In case that the solution coating method is conducted, surface treatment is preferably applied in order to increase a bonding strength between the substrate and the pressure-sensitive adhesive layer such that a primer is previously applied to the polyolefin substrate.

### (EFFECT OF THE INVENTION)

In the surface protection film according to the present invention, the rubber pressure-sensitive adhesive layer is laminated on the polyolefin substrate, the rubber resin constituting the rubber pressure-sensitive adhesive layer is the above-described specific styrene elastomer, and the pressure-sensitive adhesive layer has a tensile storage modulus at a frequency of 10 Hz of the 2.5×10⁹ Pa or more at -100°C, and a shear storage modulus at 10 Hz in a range of from 5×10⁴ to 5×10⁶ Pa at 23°C. As a result, (1) the initial adhesive force is excellent and the film can surely be adhered to the surface of an adherend, thereby dust is prevented from adhering on an adherend surface and the adherend surface can be prevented from scratching, as described above. Furthermore, (2) stability in adhesive force with time is enhanced, and additionally (3) workability is improved when peeling. Therefore, it becomes possible to provide a surface protection film excellent in all of (1) initial adhesive force, (2) stability in adhesive force with time and (3) peel workability.

### BRIEF DESCRIPTION OF THE DRAWING

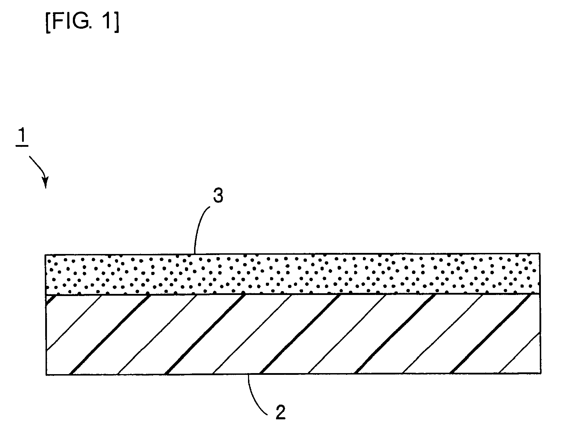

[Fig. 1] Fig. 1 is a schematically front sectional view of a surface protection film as one embodiment of the present invention.

### DESCRIPTION OF NUMERICAL REFERENCES AND SIGNS

- 1:: Surface protection film
- 2:: Polyolefin substrate
- 3:: Pressure-sensitive adhesive layer

### BEST MODE FOR CARRYING OUT THE INVENTION

The advantage of the present invention is clarified by referring to the Examples of the present invention and the Comparative Examples. However, the invention is not limited to the following Examples.
Fig. 1 is a schematically front sectional view showing the surface protection film as one embodiment of the present invention. In the following Examples and Comparative Examples, as shown in Fig. 1, a surface protection film 1 comprising a polyolefin substrate 2 and laminated on one side thereof, a pressure-sensitive adhesive layer 3 was prepared and evaluated.

Specific Examples and Comparative Examples of the surface protection film are described below.

### (Materials used)

### [Rubber resin]

SIBS (1) : Product of Kaneka Corporation, product number: SIBSTAR 073T, block copolymer of styrene and isobutylene (Mw: about 70,000, styrene content in whole monomer: 30% by weight)
SIBS (2) : Product of Kaneka Corporation, product number: SIBSTAR 072T, block copolymer of styrene and isobutylene (Mw: about 70, 000, styrene content in whole monomer: 23% by weight)
SIBS (3) : Product of Kaneka Corporation, product number: SIBSTAR 102T, block copolymer of styrene and isobutylene (Mw: about 100, 000, styrene content in whole monomer: 14% by weight)
SIBS (4) : Product of Kaneka Corporation, product number: SIBSTAR 103T, block copolymer of styrene and isobutylene (Mw: about 100, 000, styrene content in whole monomer: 30% by weight)
SEBS (1): Product of Kraton Polymers, product number: KRATON G1657, block copolymer of styrene and ethylene-butylene (styrene content in whole monomer: 13% by weight)
SEBS (2): Product of Asahi Kasei Corporation, product number: TUFTEC H1052, block copolymer of styrene and ethylene-butylene (styrene content in whole monomer: 20% by weight)
SEBS (3): Product of Asahi Kasei Corporation, product number: TUFTEC H1221, block copolymer of styrene and ethylene-butylene (styrene content: 12% by weight)
HSBR: Product of JSR Corporation, DYNARON 1321P, hydrogenated product of elastomer having polystyrene block and random polymer block of styrene and conjugated diene (styrene content: 10% by weight)
PIB: Product of BASF, product number: OPANOL B80, polyisobutylene resin

### [Tackifier]

DAINA FRECIA: Product of Idemitsu Kosan Co., Ltd., paraffin oil, product number: DAINA FRECIA P-430
GRYSOPEARL V190: Product of BASF, liquid polyisobutylene resin
GRYSOPEARL V500: Product of BASF, liquid polyisobutylene resin
CLEARON LH: Product of Yasuhara Chemical Co., Ltd., hydrogenated terpene resin
ARKON P125: Product of Arakawa Chemical Industries, Ltd. , hydrogenated petroleum resin
OPANOL B15: Product of BASF, liquid polyisobutylene resin

### [Olefin oligomer]

VISCOL 660P: Product of Sanyo Chemical Industries, Ltd. , propylene oligomer
EXCEREX 30200BT: Product of Mitsui Chemicals, Inc., ethylene oligomer

### [Polyolefin substrate]

PB170A: Polypropylene, product of Sunallomer Co.
PEX6800A: Titanium oxide, product of Tokyo Printing Ink Mfg. Co., Ltd., product number: PEX6800A White
UVT-52: Hindered amine light stabilizer, product of Tokyo Printing Ink Mfg. Co., Ltd., product number: PPM UVT-52

### [Evaluation of basic properties as surface protection film]

### (Example 1)

A pressure-sensitive adhesive composition containing 100 parts by weight of SIBS (2) as a styrene elastomer and 20 parts by weight of an alicyclic saturated petroleum resin (a product of Arakawa Chemical Industries, Ltd., trade name: ARKON P125) as a tackifier, and a polypropylene substrate layer comprising a polypropylene (a product of Sunallomer, product number: PB170A) were co-extruded by a T die method to obtain a surface protection film comprising a polypropylene substrate having a thickness of 50 µm and laminated thereon, a rubber pressure-sensitive adhesive layer having a thickness of 10 µm.

### (Examples 2 to 5 and Comparative Examples 1 to 6)

Surface protection films were obtained in the same manner as in Example 1 except for changing the styrene elastomer used, the tackifier used, and their amounts added, as shown in Table 1 below.

### (Evaluation of Examples and Comparative Examples)

Shear storage modulus (1) and tensile storage modulus (2) of the rubber pressure-sensitive adhesive layer in each of the surface protection films obtained above were measured by the following manners. Furthermore, (3) initial adhesive force, (4) initial peeling force, (5) adhesive force with time and (6) contamination of adherend of the surface protection films obtained were evaluated by the following manners. The results are shown in Table 1 below.

### (1) Shear storage modulus

Shear storage modulus of the rubber pressure-sensitive adhesive layer was measured with a dynamic viscoelasticity spectrum measurement device (a product of IT Keisoku Kabushiki Kaisha, product number: DVA-200) at a frequency of 10 Hz at a temperature rising rate of 6°C/min in a range of from -50°C to +150°C, and each shear storage modulus at -30°C, 23°C and 70°C was obtained.

### (2) Tensile storage modulus

Tensile storage modulus of the rubber pressure-sensitive adhesive layer obtained was measured with a dynamic viscoelasticity spectrum measurement device (a product of IT Keisoku Kabushiki Kaisha, product number: DVA-200) at a frequency of 10 Hz at a temperature rising rate of 6°C/min in a range of from -100°C to +50°C, and tensile storage modulus at -100°C was obtained.

### (3) Initial adhesive force

The surface protection film obtained was adhered to a coated steel plate (alkyd-melamine coating film, surface gloss: 80%) for automobiles by moving a 2 kg contact roller once on the surface protection film at a rate of 300 mm/min under environments of room temperature of 23°C and relative humidity of 65%. After allowing to stand for 30 minutes in its state, 180° peel strength in 25 mm width was measured at a peeling rate of 300 mm/min according to JIS Z0237. The peel strength thus measured was used as an initial adhesive force.

### (4) Initial peel force

The surface protection film obtained was adhered to a coated steel plate (alkyd-melamine coating film, surface gloss: 80%) for automobiles by moving a 2 kg contact roller once on the surface protection film at a rate of 300 mm/min under environments of room temperature of 23°C and relative humidity of 65%. After allowing to stand for 30 minutes in its state, 180° peel strength in 25 mm width was measured at a peeling rate of 30 m/min according to JIS Z0237. The peel strength thus measured was used as an initial peel force.

### (5) [Adhesive force with time]

The surface protection film obtained was adhered to a coated steel plate for automobiles in the same manner as in the measurement of the initial peel strength (4). After allowing to stand in a gear oven at 70°C for 7 days in its state, 180° peel strength in 25 mm width was measured at a peeling rate of 300 mm/min according to JIS Z0237.

### (6) Contamination evaluation of adherend

At the time of the measurement of each of peel strengths (3) to (5), the presence or absence of contamination on the surface of the adherend after peeling was visually observed.

**[Table 1]**

| | | EX. 1 | EX. 2 | Ex. 3 | Ex. 4 | Ex.5 | Comp. Ex.1 | Comp.Ex.2 | Comp.Ex.3 | Comp.Ex.4 | Comp.Ex.5 | Comp.Ex.6 |
|---|---|---|---|---|---|---|---|---|---|---|---|---|
| St Elastomer | | SIBS (2) 100 parts | SIBS (1) 100 parts | SIBS (1) 100 parts | SIBS (3) 100 parts | SIBS (4) 100 parts | SEBS (1) 100 parts | SEBS (2) 100 parts | SEBS (2) 100 parts | SEBS (2) 100 parts | HSBR 100 parts | SEBS (3) 100 parts |
| Tackifier | | ARKON P125 20 parts | CLEARON LH 10 parts | CLEARON LH 20 parts | CLEARON LH 20 parts | CLEARON LH 20 parts | CLEARON LH 40 parts | ARKON P125 40 parts | ARKON P125 10 parts | ARKON P125 20 parts | ARKON P125 20 parts | ARKON P125 20 parts |
| Shear Storage Modulus (X10⁵Pa) | -30°C | 107 | 172 | 122 | 106 | 145 | 26.9 | 392 | 189 | 278 | 400 | 430 |
| | 23°C | 4.0 | 5.7 | 4.6 | 3.5 | 5.3 | 3.9 | 11.1 | 12.3 | 11.1 | 4.6 | 4.6 |
| | 70°C | 2.8 | 4.2 | 3.3 | 2.8 | 4.1 | 3.0 | 6.6 | 8.4 | 7.2 | 3.4 | 2.6 |
| Tensile Storage Modulus (X10⁹Pa) | -100°C | 4.6 | 3.7 | 3.8 | 3.3 | 3.9 | 2.2 | 2.1 | 2.2 | 2.1 | 2.2 | 2.3 |
| Initial Adhesive Force (N/25mm) | | 1.0 | 2.5 | 5.7 | 2.6 | 3.9 | 1.7 | 5.8 | 0.9 | 1.2 | 1.7 | 1.7 |
| Initial Peel Force (N/25mm) | | 0.3 | 1.0 | 1.2 | 0.9 | 1.0 | 4.9 | 5.5 | 4.8 | 5.3 | 5.2 | 5.2 |
| Adhesive Force with Time (N/25mm) | | 1.5 | 1.5 | 5.0 | 3.2 | 4.0 | 2.2 | 6.2 | 1.5 | 2.0 | 3.9 | 4.0 |
| Presence or Absence of Contamination | | None | None | None | None | None | None | None | None | None | None | None |
| (Part is weight basis) | | | | | | | | | | | | |

It is apparent from Table 1 that in Comparative Examples 1 to 6 in which the tensile storage modulus at -100°C is less than 2.5×10⁹ Pa, the initial adhesive force is a value that can sufficiently adhere to the surface of an adherend, but the initial peel force is large as from 4.8 to 5.5 N/25 mm, and peel workability is poor. Contrary to this, it is seen that in Examples 1 to 5, the initial peel force is low as 1.2 N/25 mm or less, and as a result, the film can easily be peeled from the adherend. Furthermore, it is seen that in Examples 1 to 5, the initial adhesive force has a sufficient value of 1.0 N/25 mm or more, and undesirable increase of adhesive force with the passage of time does not occur.

In particular, it is seen that in Example 3, despite that the initial adhesive force is high as 5.7 N/25 mm, the initial peel force remains at low value of 1.2 N/25 mm, and peel workability is excellent. This is due to that the tensile storage modulus at -100°C is high as 3.8×10⁹ Pa.

### (Example 6)

70 parts by weight of SIBS (2), a product of Kaneka Corporation, as the block copolymer (D) and 30 parts by weight of SEBS (2), a product of Asahi Kasei Corporation, as the block copolymer (F) were mixed, and 20 parts by weight of CLEARON LH, trade name, a product of Yasuhara Chemical Co., Ltd., as the tackifier were further added thereto to obtain a pressure-sensitive adhesive.

The SIBS as the block copolymer (D) is a block copolymer of styrene, isobutylene and styrene, and comprises a styrene polymer block (A) and an isobutylene polymer block (C). The SEBS as the block copolymer (F) is a block copolymer of styrene, ethylene, butylene and styrene, and comprises a styrene polymer block (A) and a hydrogenated product (E) of a butadiene polymer block.

A rubber pressure-sensitive adhesive layer comprising the pressure-sensitive adhesive, and a substrate layer comprising a polypropylene were co-extruded with a T die method to obtain a surface protection film comprising the polypropylene substrate having a thickness of 50 µm and laminated thereon, the rubber pressure-sensitive adhesive layer having a thickness of 10 µm.

### (Examples 7 to 10 and Comparative Example 7)

Surface protection films were obtained in the same manner as in Example 6 except that the addition amounts of the block copolymer (D) and the block copolymer (F) and the kind and addition amount of the tackifier were changed as shown in Table 2 below.

### (Evaluation of Examples 6 to 10 and Comparative Example 7)

Each shear storage modulus at -30°C, 23°C and 70°C and tensile storage modulus at -100°C of the pressure-sensitive adhesive layer in each surface protection film obtained above, and (1) initial adhesive force, (2) initial peel force and (3) adhesive force with time of the surface protection film were evaluated in the same manners as in Example 1 except for replacing the adherend with a stainless steel plate (SUS304, having a surface polished by a No. 280 water proof abrasive paper), and (4) constant load holding power was evaluated in the following manner.

### (4) Constant load holding power

The surface protection film obtained was adhered to a stainless steel plate (SUS304, having a surface polished by a No. 280 water proof abrasive paper) in the same manner as in the case of the measurement of (1) initial adhesive force, and one extremity in a longitudinal direction of the film was then peeled to form a tong hold. Bench mark was marked on the peel boundary part, and a test plate was held horizontally facing the film-adhered side downward. The test plate was allowed to stand for 30 minutes in its state, and weight of 60 g/25 mm was downwardly hung from the bench hold, and falling time was measured.

Measurement length was 50 mm, measurement temperature was 40°C, and peel exceeding 50 mm was judged as "falling".
The results are shown in Table 2 below.

**[Table 2]**

| | | Ex. 6 | Ex. 7 | Ex. 8 | Ex. 9 | Ex.10 | Comp. Ex. 7 |
|---|---|---|---|---|---|---|---|
| Block Copolymer (D) | | SIBS (2) 70 parts | SIBS (2) 65 parts | SIBS (2) 95 parts | SIBS (2) 80 parts | SIBS (2) 100 parts | - |
| Block Copolymer (F) | | SEBS (2) 30 parts | SEBS (2) 35 parts | SEBS (2) 5 parts | SEBS (2) 20 parts | - | SEBS (2) 100 parts |
| Tackifier | | CLEARON LH 20 parts | CLEARON LH 20 parts | CLEARON LH 20 parts | CLEARON LH 10 parts | CLEARON LH 20 parts | CLEARON LH 20 parts |
| Shear Storage Modulus (X10⁵Pa) | -30°C | 111 | 113 | 103 | 119 | 142 | 100 |
| | 23°C | 4.9 | 6.1 | 4.2 | 6.0 | 4.5 | 9.5 |
| | 70°C | 3.7 | 4.6 | 3.2 | 4.4 | 3.3 | 7.0 |
| Tensile Storage Modulus (X10⁹Pa) | -100°C | 3.4 | 3.0 | 4.1 | 3.8 | 4.0 | 2.2 |
| Initial Adhesive Force | (N/25mm) | 3.4 | 3.7 | 5.6 | 5.0 | 6.2 | 2.1 |
| Initial Peel Force | (N/25mm) | 2.5 | 2.6 | 2.4 | 2.2 | 1.4 | 17.5 |
| Adhesive Force with Time | (N/25mm) | 3.3 | 3.5 | 3.1 | 4.5 | 2.4 | 3.2 |
| Constant Load Holding Power (Falling Time) (min.) | | 60< | 60< | 30 | 45 | 2 | 60< |
| (Part is weight basis) | | | | | | | |

It is apparent from Table 2 that in the surface protection films of Examples 6 to 9 in which the pressure-sensitive adhesive layer comprising the pressure-sensitive adhesive containing a rubber resin which is a mixture of the block copolymer (D) and the block copolymer (F), constant load holding power can be improved without remarkable deterioration of initial adhesive force, initial peel force and adhesive force with time.

### [Performance evaluation as coating film protection film]

### (Example 11)

A rubber pressure-sensitive adhesive composition containing 100 parts by weight of SIBS (1) as a styrene elastomer which is a rubber resin and 20 parts by weight of DIANA FRECIA P-430 as a tackifier was provided.

A polypropylene substrate layer obtained by dry blending 100 parts by weight of a polypropylene resin (PB170A), 20 parts by weight of titanium oxide (PEX6800A) and 3 parts by weight of a hindered amine light stabilizer (UVT-52), and a rubber pressure-sensitive adhesive layer comprising the above-described rubber pressure-sensitive adhesive composition were co-extruded with a T die method to obtain a sheet for protecting coating film comprising the polypropylene substrate having a thickness of 50 µm, the rubber pressure-sensitive adhesive layer laminated thereon and having a thickness of 10 µm.

### (Examples 12 to 16, Comparative Examples 8 to 10, and Examples 17 and 18)

Sheets for protecting coating film were obtained in the same manner as in Example 11 except for changing the kind and the addition amount of the polyolefin substrate, rubber resin and tackifier used as shown in Tables 3 and 4 below.

### (Evaluation of Examples 11 to 16, Comparative Examples 8 to 10, and Examples 17 and 18)

(1) Shear storage modulus and (2) tensile storage modulus of the rubber pressure-sensitive adhesive layer in each of the sheets for protecting the coating film obtained were measured in the same manners as in Example 1. Furthermore, (3) initial adhesive force, (4) initial peel force and (5) adhesive force with time of each of the sheets for protecting coating film were evaluated in the same manners as in Example 1. Additionally, (6) contamination properties of the coating film surface were evaluated in the following manner.
In preparing the above sheets for protecting the coating film, a polypropylene substrate having a thickness of 50 µm on which a rubber pressure-sensitive adhesive layer was not provided was separately provided, and (7) ultraviolet transmission was evaluated on this polypropylene substrate in the following manner.

### (6) (Contamination evaluation of adherend)

A sheet for protecting coating film was adhered to a steel plate having an alkyd-melamine coating film having a glass transition temperature of 60°C from the rubber pressure-sensitive adhesive layer side at room temperature. Sunshine carbon arc test was conducted for 1,000 hours according to JIS B7751. After allowing to stand at room temperature for 3 hours, the sheet for protecting coating film was peeled from the coating film surface. Presence or absence of adhesive remain on the coating film surface and presence or absence of whitening or blushing on the coating film after peeling were evaluated by the following evaluation criteria. Regarding the adhesive remain evaluation, part of the steel plate corresponding to the peripheral portion of the sheet for coating film protection was particularly examined.

### [Presence or absence of adhesive remain]

○: Adhesive remain was not observed.
×: Adhesive remain was observed.

### [Presence or absence of blushing]

○: Whitening was not observed.
×: Whitening was observed.

### (7) Evaluation of ultraviolet transmission

Ultraviolet transmission at a wavelength in a range of from 190 to 370 nm was measured using a spectrophotometer U-4000, a product of Hitachi, Ltd., and evaluated by the following evaluation criteria.
○: Ultraviolet transmission is 10% or less.
×: Ultraviolet transmission exceeds 10%.
The results are shown in Tables 3 and 4 below.

**[Table 3]**

| | | Example 11 | Example 12 | Example 13 | Example 14 | Example 15 | Example 16 |
|---|---|---|---|---|---|---|---|
| Polyolefin Substrate Layer | | PB170A 100 parts PEX6800A 20 parts UVT-52 3parts | PB170A 100parts PEX6800A 20parts UVT-52 3parts | PB170A 100parts PEX6800A 20parts UVT-52 3parts | PB170A 100parts PEX6800A 20parts UVT-52 3parts | PB170A 100parts PEX6800A 20parts UVT-52 3parts | PB170A 100parts PEX6800A 20parts UVT-52 3parts |
| Pressure-Sensitive Adhesive Layer | Rubber Resin | SIBS(1) 100 parts | SIBS(1) 100 parts | SIBS(1) 100 parts | SIBS(1) 100 parts | SIBS(1) 100 parts | SIBS(2) 100 parts |
| | Tackifier | DIANA FRECIA P-430 20 parts | GRYSOPEARL V190 20 parts | GRYSOPEARL V500 20 parts | CLEARON LH 20 parts | CLEARON LH 30 parts | CLEARON LH 30 parts |
| Shear Storage Modulus (X10⁵Pa) | - 30°C | 58.8 | 70.7 | 93.5 | 122 | 105 | 124 |
| | 23°C | 4.2 | 4.5 | 5.3 | 9.6 | 3.0 | 3.6 |
| | 70°C | 3.2 | 3.3 | 3.8 | 3.3 | 2.2 | 2.4 |
| Tensile Storage Modulus (X10⁹Pa) | -100°C | 3.7 | 4.7 | 4.2 | 3.8 | 3.8 | 3.9 |
| Initial Adhesive Force (N/25mm) | 300mm/ min. | 6.1 | 5.7 | 6.0 | 6.5 | 6.8 | 6.4 |
| Initial Peel Force (N/25mm) | 30m/min. | 2.1 | 1.8 | 0.8 | 0.8 | 0.8 | 1.1 |
| Adhesive Force with Time (N/25mm) | 300mm/min. | 6.5 | 6.0 | 6.4 | 5.8 | 6.2 | 6.2 |
| Presence or Absence of Adhesive Remain | | ○ | ○ | ○ | ○ | ○ | ○ |
| Presence or Absence of Whitening | | ○ | ○ | ○ | ○ | ○ | ○ |
| Evaluation of Ultraviolet Transmission | | ○ | ○ | ○ | ○ | ○ | ○ |
| (Part is weight basis) | | | | | | | |

**[Table 4]**

| | | Comp. Ex. 8 | Comp. Ex. 9 | Comp. Ex.10 | Ex. 17 | Ex. 18 |
|---|---|---|---|---|---|---|
| Polyolefin Substrate Layer | | PB170A 100 parts PEX6800A 20 parts UVT-52 3 parts | PB170A 100 parts PEX6800A 20 parts UVT-52 3 parts | PB170A 100 parts PEX6800A 20 parts UVT-52 3 parts | PB170A 100 parts | PB70A 100 parts PEX6800A 20 parts |
| Pressure-Sensitive Adhesive Layer | Rubber Resin | SEBS(1) 100 parts | SEBS(2) 100 parts | PIB 100 parts | SIBS(1) 100 parts | SIBS(1) 100 parts |
| | Tackifier | CLEARON LH 40 parts | ARKON P125 20 parts | OPANOL B15 20 parts | GRYSOPEARL V190 20 parts | GRYSOPEARL V190 20 parts |
| Shear Storage Modulus (X10⁵Pa) | -30°C | 26.9 | 278 | 20.3 | 70.7 | 70.7 |
| | 23°C | 3.9 | 11.1 | 2.3 | 4.5 | 4.5 |
| | 70°C | 3.0 | 7.2 | 2.3 | 3.3 | 3.3 |
| Tensile Storage Modulus (X10⁹Pa) | -100°C | 2.2 | 2.1 | 3.1 | 4.7 | 4.7 |
| Initial Adhesive Force (N/25mm) | 300mm/ min. | 3.6 | 3.2 | 6.4 | 5.6 | 5.1 |
| Initial Peel Force (N/25mm) | 30m/min. | 6.2 | 5.8 | 2.5 | 2.0 | 2.1 |
| Adhesive Force with Time (N/25mm) | 300mm/min. | 2.3 | 2.6 | 2.9 | | - |
| Presence or Absence of Adhesive Remain | | ○ | ○ | × | × | × |
| Presence or Absence of Whitening | | ○ | ○ | × | - | - |
| Evaluation of Ultraviolet Transmission | | ○ | ○ | ○ | × | × |
| (Parts is weight basis) | | | | | | |

| | | | | | | |
|---|---|---|---|---|---|---|
| Note) -: Not Evaluated | | | | | | |

### [Evaluation of low temperature adhesive force and evaluation of adaptability to various adherends]

### (Examples 19 to 26 and Comparative Examples 11, 12 and 13)

Protection films for protecting coating film corresponding to Examples 11 to 18 and Comparative Example 8, 9 and 2 were used respectively.

### (Comparative Example 14)

Surface protection film was obtained by changing the kind and addition amount of the substrate, rubber resin and tackifier used as shown in Table 6 below.

### (Evaluation of Examples 19 to 26 and Comparative Examples 11 to 14)

(1) Shear storage modulus and tensile storage modulus of each of the above-described surface protection films were evaluated in the same manners as in Example 1 (the cases that evaluation had already been made were transcribed in Tables 5 and 6). Furthermore, (2) low temperature adhesive force of each surface protection film to the coated steel plate (steel plate having alkyd-melamine coating film having a glass transition temperature of 60°C) and an acrylic plate (a product of Kuraray Co., Ltd., paraglass) was evaluated in the following manner. Additionally, (3) initial adhesive force, (4) initial peel force and (5) adhesive force with time to the above-described coated steel plate, acrylic plate and stainless steel plate (SUS304, having a surface polished by a No. 280 water proof abrasive paper) were evaluated according to Example 1, and evaluation of (6) adhesive remain was conducted in the same manner as in the contamination evaluation of adherend in Example 11 (the cases that evaluation had already been made were transcribed in Tables 5 and 6).

### (2) Low temperature adhesive force

The surface protection film was adhered from the side of the rubber pressure-sensitive adhesive layer to a coated steel plate and an acrylic plate by moving a 2 kg contact roller once on the surface protection film at a rate of 300 mm/min under environment of room temperature of 23°C and relative humidity of 65%, respectively, and the resulting laminate was allowed to stand for 30 minutes in its state. After allowing the laminate to stand in a constant temperature chamber at -5°C for 30 minutes, 180° peeling in 25 mm width was conducted at each rate of 0.3, 3, 30, 300 and 500 mm/min. Morphology during peeling of the pressure-sensitive adhesive layer of the surface protection film in this case was evaluated in the following evaluation criteria.

### [Evaluation criteria of low temperature adhesive force]

○: Rubbery peeling (Rubbery)
Δ: Vibration peeling (Stick-slip)
×: Glassy peeling (Glassy)

The results are shown in Tables 5 and 6 below.

As is apparent from Table 5, in Examples 19 to 26, even when the film is applied to the surface of an adherend comprising a synthetic resin such as an acrylic resin, and even when the film is applied to the surface of an adherend having a polarity, such as a stainless steel, the initial adhesive force is sufficient, and adhesive remain was difficult to occur when peeled.

**[Table 5]**

| | | | Ex.19 | Ex.20 | Ex. 21 | Ex. 22 | Ex.23 | Ex.24 | Ex. 25 | Ex.26 |
|---|---|---|---|---|---|---|---|---|---|---|
| Polyolefin Substrate Layer | | | PB170A 100 parts PEX6800A 20 parts UVT-52 3 parts | PB170A 100 parts PEX6800A 20 parts UVT-52 3 parts | PB170A 100 parts PEX6800A 20 parts UVT-52 3 parts | PB170A 100 parts PEX6800A 20 parts UVT-52 3 parts | PB170A 100 parts PEX6800A 20 parts UVT-52 3 parts | PB170A 100 parts PEX6800A 20 parts UVT-52 3 parts | PB170A 100 parts | PB170A 100 parts PEX6800A 20 parts |
| Pressure-Sensitive Adhesive Layer | Rubber Resin | | SIBS(1) 100 parts | SIBS(1) 100 parts | SIBS(1) 100 parts | SIBS(1) 100 parts | SIBS(1) 100 parts | SIBS(2) 100 parts | SIBS(1) 100 parts | SIBS(1) 100 parts |
| | Tackifier | | DIANA FRECIA P-430 20 Parts | GRYSOPEARL V190 20 parts | GRYSOPEARL V500 20 Parts | CLEARON LH 20 parts | CLEARON LH 30 parts | CLEARON LH 30 Parts | GRYSOPEARL V190 20 parts | GRYSOPEARL V190 20 parts |
| Shear Storage Modulus (X10⁵Pa) | | -30°C | 58.8 | 70.7 | 93.5 | 122 | 105 | 124 | 70.7 | 70.7 |
| | | 23°C | 4.2 | 4.5 | 5.3 | 4.6 | 3 | 3.6 | 4.5 | 4.5 |
| | | 70°C | 3.2 | 3.3 | 3.8 | 3.3 | 2.2 | 2.4 | 3.3 | 3.3 |
| Tensile Storage Modulus (X10⁹Pa) | | -100°C | 3.7 | 4.7 | 4.2 | 3.8 | 3.8 | 3.9 | 4.7 | 4.7 |
| Low Temperature Adhesive Force (to Coated Steel Plate) | | 0.3mm/min. | ○ | ○ | ○ | ○ | ○ | ○ | ○ | ○ |
| | | 3mm/min. | ○ | ○ | ○ | ○ | ○ | ○ | ○ | ○ |
| | | 30mm/min. | ○ | ○ | ○ | ○ | ○ | ○ | ○ | ○ |
| | | 300mm/min. | Δ | Δ | Δ | Δ | Δ | Δ | Δ | Δ |
| | | 500mm/min. | Δ | Δ | Δ | Δ | Δ | Δ | Δ | Δ |
| Inital Adhesive Force(N/25mm, to Coated Steel Plate) | | 300mm/min. | 6.1 | 5.7 | 6.0 | 6.5 | 6.8 | 6.4 | 5.6 | 5.1 |
| Initial Peel Force (N/25mm, to Coated Steel Plate) | | 30m/min. | 2.1 | 1.8 | 0.8 | 0.8 | 0.8 | 1.1 | 2.0 | 2.1 |
| Adhesive Force with Time (N/25mm, to Coated Steel Plate) | | 300mm/min. | 6.5 | 6.0 | 6.4 | 5.8 | 6.2 | 6.2 | - | - |
| Presence or Absence of Adhesive | | Remain | ○ | ○ | ○ | ○ | ○ | ○ | × | × |
| Low Temperature Adhesive Force (to Acrylic Plate) | | 0.3mm/min. | ○ | ○ | ○ | ○ | ○ | ○ | ○ | ○ |
| | | 3mm/min. | ○ | ○ | ○ | ○ | ○ | ○ | ○ | ○ |
| | | 30mm/min. | ○ | ○ | ○ | ○ | ○ | ○ | ○ | ○ |
| | | 300mm/min. | Δ | Δ | Δ | Δ | Δ | Δ | Δ | Δ |
| | | 500mm/min. | Δ | Δ | Δ | Δ | Δ | Δ | Δ | Δ |
| Initial Adhesive Force (N/25mm, to Acrylic Plate) | | 300mm/min. | 5.8 | 6.1 | 6.1 | 5.9 | 6.2 | 6.4 | - | - |
| Initial Peel Force(N/25mm, to Acrylic Plate) | | 30m/min. | 3.1 | 3.3 | 3.1 | 3.0 | 3.2 | 3.3 | - | - |
| Initial Adhesive Force(N/25mm, to SUS Plate) | | 300mm/min. | 4.1 | 4.6 | 4.5 | 2.4 | 2.3 | 4.0 | - | - |
| Initial Peel Force (N/25mm, to SUS Plate) | | 30m/min. | 1.7 | 0.6 | 0.6 | 0.3 | 0.3 | 0.5 | - | - |
| Adhesive Force with Time (N/25mm, to SUS Plate) | | 300mm/min. | 5.7 | 3.3 | 3.3 | 3.7 | 6.1 | 6.2 | - | - |
| (Part is weight basis) | | | | | | | | | | |

**[Table 6]**

| | | | Comp. Ex. 11 | Comp. Ex. 12 | Comp. Ex. 13 | Comp. Ex. 14 |
|---|---|---|---|---|---|---|
| Polyolefin Substrate Layer | | | PB170A 100parts PEX6800A 20parts UVT-52 3parts | PB170A 100parts PEX6800A 20parts UVT-52 3parts | PB170A 100parts PEX6800A 20parts UVT-52 3parts | PB170A 100parts PEX6800A 20parts UVT-52 3parts |
| Pressure- Sensitive Adhesive Layer | Rubber Resin | | SEBS(1) 100parts | SEBS(2) 100parts | SEBS(2) 100 parts | SEBS(2) 100 parts |
| | Tackifier | | CLEARON LH 40 parts | ARKON P125 20 parts | ARKON P125 40 parts | ARKON P125 20 parts DIANA FRECIA P-430 20 parts |
| Shear Storage Modulus (X10⁵Pa) | | -30°C | 26.9 | 338 | 392 | 449 |
| | | 23°C | 3.9 | 8.5 | 11.1 | 5.1 |
| | | 70°C | 3 | 5.5 | 6.6 | 2.7 |
| Tensile Storage Modulus (X10⁹Pa) | | -100°C | 2.2 | 2.1 | 2.1 | 2.0 |
| Low Temperature Adhesive Force (to Coated Steel Plate) | | 0.3mm/min. | ○ | ○ | ○ | ○ |
| | | 3mm/min. | ○ | Δ | ○ | ○ |
| | | 30mm/min. | ○ | Δ | Δ | Δ |
| | | 300mm/min. | ○ | Δ | Δ | Δ |
| | | 500mm/min. | ○ | Δ | Δ | Δ |
| Initial Adhesive Force (N/25mm, to Coated Steel Plate) | | 300mm/ 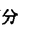 | 3.6 | 3.2 | 5.8 | 4.4 |
| Initial Peel Force (N/25 mm, to Coated Steel Plate) | | 30m/min. | 6.2 | 5.8 | 5.5 | 5.9 |
| Adhesive Force with Time (N/25mm, to Coated Sheel Plate) | | 300mm/min. | 2.3 | 3.4 | 6.2 | 4.6 |
| Presence or Absence of Adhesive Remain | | | ○ | ○ | ○ | ○ |
| Low Temperature Adhesive Force (to Acrylic Plate) | | 0.3mm/min. | ○ | ○ | ○ | ○ |
| | | 3mm/min. | ○ | Δ | ○ | ○ |
| | | 30mm/min. | ○ | Δ | Δ | Δ |
| | | 300mm/min. | ○ | Δ | Δ | Δ |
| | | 500mm/min. | ○ | Δ | Δ | Δ |
| Initial Adhesive Force(N/25mm, to Acrylic Plate) | | 300mm/min. | 4.0 | 3.5 | 6.4 | 4.5 |
| Initial Peel Force (N/25mm, to Acrylic Plate) | | 30m/min. | 5.5 | 5.6 | 4.6 | 4.9 |
| Initial Adhesive Force(N/25mm, to SUS Plate) | | 300mm/min. | 0.6 | 2.7 | 4.5 | 2.9 |
| Initial Peel Force (N/25mm, to SUS Plate) | | 30m/min. | 3.4 | 3.7 | 3.9 | 4.0 |
| Adhesive Force with Time(N/25mm, to SUS Plate) | | 300mm/min. | 3.4 | - | 5.2 | - |
| (Part is weight basis) | | | | | | |

### [Evaluation of olefin oligomer addition]

### (Example 27)

A rubber pressure-sensitive adhesive composition containing 100 parts by weight of SIBS (1) as a styrene elastomer which is a rubber resin, 20 parts by weight of CLEARON LH as a tackifier and 5 parts by weight of VISCOL 660P as an olefin oligomer was provided. A rubber pressure-sensitive adhesive layer comprising this pressure-sensitive adhesive composition and a substrate layer comprising a polypropylene (block polypropylene, a product of Sunallomer, product number: PB170A) were co-extruded with a T die method to obtain a surface protection film comprising the polypropylene substrate having a thickness of 50 µm and the rubber pressure-sensitive adhesive layer laminated thereon and having a thickness of 10 µm.

### (Examples 28 to 32 and Comparative Examples 15 to 18)

Surface protection films were obtained in the same manner as in Example 1 except for changing the kind and addition amount of the rubber resin and tackifier used as shown in Tables 7 and 8 below.

### (Evaluation of Examples 27 to 32 and Comparative Examples 15 to 18)

(1) Shear storage modulus and tensile storage modulus of the rubber pressure-sensitive adhesive layer of each surface protection film and (3) initial adhesive force, (4) initial peel force and (5) adhesive force with time of each surface protection film were evaluated in the same manners as in Example 1.
(2) Adhesive remain evaluation was conducted in the following manner.

### (2) Adhesive remain evaluation

A surface protection film was adhered on the side of the rubber pressure-sensitive adhesive layer to a coated steel plate for automobiles (surface gross: 80%) after coating (steel plate A) and a coated steel plate for automobiles (steel plate B) obtained by roughening the surface of the coated steel plate for automobiles with an abrasive paper (#1200), by moving a 2 kg contact roller once on the surface protection film at a rate of 300 mm/min under the environment of room temperature of 23°C and relative humidity of 65%, respectively, and each laminate was allowed to stand for 30 minutes in its state. After allowing the same in a constant temperature chamber at 70°C for 7 days, 180° peel strength in 25 mm width was conducted at a peeling rate of 300 mm/min in the state of heating to 70°C. Adhesive remain properties on the coating film in this case were evaluated as follow.

### [Evaluation criteria of adhesive remain]

○: No adhesive remain
×: Adhesive remain is present.
The results are shown in Tables 7 and 8 below.

**[Table 7]**

| | | | Example 27 | Example 28 | Example 29 | Example 30 | Example 31 | Example 32 |
|---|---|---|---|---|---|---|---|---|
| Rubber Resin | | | SIBS(1) 100 parts | SIBS(1) 100 parts | SIBS(1) 100 parts | SIBS(1) 100 parts | SIBS(2) 100 parts | SIBS(1) 100 parts |
| Tackifier | | | CLEARON LH 20 parts | CLEARON LH 20 parts | CLEARON LH 20 parts | CLEARON LH 20 parts | CLEARON LH 20 parts | CLEARON LH 20 parts |
| Olefin Oligomer | | | VISCOL 660P 5 parts | VISCOL 660P 2.5 parts | EXCEREX 30200BT 5 parts | EXCEREX 30200BT 2.5 parts | VISCOL 660P 2.5 parts | - |
| Shear Storage Modulus (X10⁵Pa) | | -30°C | 205 | 112 | 225 | 109 | 48.1 | 122 |
| | | 23°C | 7.5 | 6.2 | 7.5 | 6.0 | 5.5 | 4.6 |
| | | 70°C | 4.9 | 4.5 | 4.8 | 4.4 | 3.7 | 3.3 |
| Tensile Storage Modulus (X10⁹Pa) | | - 100°C | 4.4 | 3.7 | 4.1 | 4.0 | 3.9 | 3.8 |
| Adhesive Remain Evaluation | Steel Plate A | 300mm/min. | ○ | ○ | ○ | ○ | ○ | ○ |
| | Steel B Plate | 300mm/min. | ○ | ○ | ○ | ○ | ○ | × (*1) |
| Initial Adhesive Force (N/25mm) | Steel Plate A | 300mm/min. | 2.8 | 3.1 | 3.0 | 3.5 | 3.8 | 6.1 |
| Initial Peel Force (N/25mm) | | 30m/min. | 0.5 | 0.5 | 0.8 | 0.8 | 0.6 | 2.1 |
| Adhesive Force with Time (N/25mm) | | 300mm/min. | 2.7 | 3.0 | 3.1 | 3.4 | 3.6 | 6.5 |
| (Part is weight basis) | | | | | | | | |

| | | | | | | | | |
|---|---|---|---|---|---|---|---|---|
| *1: Anchor Failure at Interface Between Base and Pressure-Sensitive Adhesive Layer | | | | | | | | |

**[Table 8]**

| | | | Comp. Ex. 15 | Comp. Ex. 16 | Comp. Ex. 17 | Comp. Ex. 18 |
|---|---|---|---|---|---|---|
| Rubber Resin | | | PIB 100 parts | SEBS(1) 100 parts | PIB 100 parts | SEBS(1) 100 parts |
| Tackifier | | | CLEARON LH 20 parts | CLEARON LH 20 parts | CLEARON LH 20 parts | CLEARON LH 20 parts |
| Olefin Oligomer | | | VISCOL 660P 2.5 parts | VISCOL 660P 2.5 parts | - | - |
| Shear Storage Modulus (X10⁵Pa) | | -30°C | 48.8 | 27.3 | 35.6 | 27.2 |
| | | 23°C | 2.4 | 7.8 | 2.1 | 4.3 |
| | | 70°C | 1.4 | 6.9 | 1.2 | 3.9 |
| Tensile Storage Modulus (x10⁹Pa) | | -100°C | 4.0 | 1.9 | 3.9 | 2.0 |
| Adhesive Remain Evaluation | Steel Plate A | 300mm/min. | ○ | ○ | ○ | ○ |
| | Steel Plate B | 300mm/min. | ○ | ○ | ×(*2) | ×(*2) |
| Initial Adhesive Force (N/25mm) | Steel Plate A | 300mm/min. | 4.0 | 3.8 | 6.4 | 3.6 |
| Initial Peel Force (N/25mm) | | 30m/min. | 0.8 | 4.5 | 1.1 | 6.2 |
| Adhesive Force with Time (N/25mm) | | 300mm/min. | 3.5 | 3.5 | 6.2 | 2.3 |
| (Part is weight basis) | | | | | | |

| | | | | | | |
|---|---|---|---|---|---|---|
| *2: Cohesive Failure of Rubber Pressure-Sensitive Adhesive Layer | | | | | | |

## Claims

1. A surface protection film comprising a polyolefin substrate and a pressure-sensitive adhesive layer laminated thereon and containing a rubber resin and a tackifier,
wherein the rubber resin is a styrene elastomer comprising as a main component, a block copolymer of a styrene polymer block (A) and an olefin polymer block (B), a block copolymer of a styrene polymer block (A) and a random copolymer block (B') of styrene and an olefin, and/or a hydrogenated product thereof,
and the rubber pressure-sensitive adhesive layer has a tensile storage modulus at a frequency of 10 Hz of 2.5×10⁹ Pa or more at -100°C and a shear storage modulus at 10 Hz of from 5x10⁴ to 5x10⁶ Pa at 23°C.

2. The surface protection film as claimed in claim 1,
wherein the rubber resin is a mixture of a block copolymer (D) comprising the styrene polymer block (A) and an isobutylene polymer block (C), and a block copolymer (F) comprising the styrene polymer block (A) and a conjugated diene polymer block or a hydrogenated product (E) thereof.

3. The surface protection film as claimed in claim 1 or 2,
wherein the pressure-sensitive adhesive layer has a shear storage modulus at a frequency of 10 Hz of 3×10⁷ or less at -30°C .

4. The surface protection film as claimed in claim 3,
wherein the pressure-sensitive adhesive layer has a shear storage modulus at a frequency of 10 Hz of 2x10⁵ or more at 70°C.

5. The surface protection film as claimed in any one of claims 1 to 4, wherein the rubber resin is a styrene elastomer comprising the block copolymer of the styrene polymer block (A) and the olefin polymer block (B), wherein the olefin polymer block (B) is a polyisobutylene.

6. The surface protection film as claimed in any one of claims 1 to 5, wherein the pressure-sensitive adhesive layer further contains an olefin oligomer.

7. The surface protection film as claimed in claim 6, wherein the olefin oligomer is added in an amount of 10 parts by weight or less per 100 parts by weight of the rubber resin.

8. The surface protection film as claimed in any one of claims 1 to 7, which is a surface protection film used for protecting a coating film, wherein the polyolefin substrate contains an anti-weathering agent and the polyolefin substrate has ultraviolet transmission of 10% or less in a wavelength from 190 to 370 nm.

9. A surface protection film comprising a polyolefin substrate and a pressure-sensitive adhesive layer laminated thereon and comprising a pressure-sensitive adhesive composition containing a rubber resin, a tackifier and an olefin oligomer.

10. The surface protection film as claimed in claim 9, wherein the pressure-sensitive adhesive composition contains 100 parts by weight of the rubber resin and 10 parts by weight or less of the olefin oligomer.
